(19) **Europäisches Patentamt**
**European Patent Office**
**Office européen des brevets**

(11) **EP 4 528 683 A1**

(12) **EUROPÄISCHE PATENTANMELDUNG**

(43) Veröffentlichungstag:
26.03.2025 Patentblatt 2025/13

(21) Anmeldenummer: 24202324.0

(22) Anmeldetag: 24.09.2024

(51) Internationale Patentklassifikation (IPC):
*G06V 40/18* (2022.01)    *G06V 40/40* (2022.01)
*H04N 7/15* (2006.01)

(52) Gemeinsame Patentklassifikation (CPC):
**G06V 40/18; G06V 40/45; H04N 7/15**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **25.09.2023 DE 102023125965**

(71) Anmelder: **Bundesdruckerei GmbH
10969 Berlin (DE)**

(72) Erfinder:
• **GRAUPNER, Hendrik
14050 Berlin (DE)**
• **FISCHER, Jörg
10317 Berlin (DE)**

(74) Vertreter: **Richardt Patentanwälte PartG mbB
Wilhelmstraße 7
65185 Wiesbaden (DE)**

(54) **VIDEOKONFERENZVERFAHREN, VORRICHTUNG ZUM ERMÖGLICHEN EINER TEILNAHME AN EINER VIDEOKONFERENZ, VORRICHTUNG ZUM SICHERN EINER VIDEOKONFERENZ UND SYSTEM ZUM ORGANISIEREN EINER VIDEOKONFERENZ**

(57)    Bei einer Videokonferenz wird zur Prüfung der Identität einer teilnehmenden Person eine physiologischen Reaktion der Person auf das Betrachten der Wiedergabe der von der Videokonferenz an eine Bildausgabevorrichtung bei der Person überspielten Bilddaten sensorisch erfasst und ausgewertet. Die Auswertung kann insbesondere ausnutzen, dass sich eine Person beim Betrachten der Wiedergabe ihres eigenen Bildes unbewusst anders verhält als beim Betrachten eines fremden Bildes.

FIG. 1

**EP 4 528 683 A1**

**Beschreibung**

Die Erfindung betrifft ein Videokonferenzverfahren. Sie betrifft auch eine bei dem Verfahren als Client einsetzbare Vorrichtung zum Ermöglichen einer Teilnahme an einer Videokonferenz, sie betrifft des Weiteren eine Vorrichtung zum Sichern einer Videokonferenz, die bei dem erfindungsgemäßen Verfahren einsetzbar ist, sowie ein System zum Organisieren einer Videokonferenz als Ganzes.

Bei einer Videokonferenz wird allgemein eine Verbindung zwischen einem Videokonferenzsystem und einer Kamera sowie einer Bildausgabevorrichtung der Person aufgebaut, es werden durch die Kamera Bilddaten erfasst und an das Videokonferenzsystem übertragen, und die Bilddaten werden von dem Videokonferenzsystem an die Bildausgabevorrichtung gesendet. Dies kann insbesondere Bilddaten zu teilnehmenden Personen beinhalten, die die einerseits zu prüfende Person betreffen und zugleich zumindest eine weitere Person. Die empfangenen Bilddaten werden auf der Bildausgabevorrichtung wiedergegeben.

Allgemein soll in solchen Fällen die Identität (auch: Authentizität) der Person geprüft werden. Dies erfolgt manchmal bei Unbekannten händisch, indem die Person einen Ausweis vor die Kamera hält, der von einem Leiter der Videokonferenz oder allgemein einem anderen Teilnehmer erkannt werden kann. Sonst entfällt häufig eine Überprüfung.

Die unberechtigte Teilnahme an einer Videokonferenz kann gegebenenfalls erschlichen werden. So kann ein Teilnehmer das System manipulieren und andere Bilddaten zu dem Videokonferenzsystem schicken, als sie die Kamera tatsächlich aufnimmt. Alternativ zu solchen "Deep Fakes" kann auch ein Teilnehmer einfach eine Gummimaske tragen.

Die Erfindung beruht auf folgenden Erkenntnissen:

Das menschliche Gehirn einer Person reagiert auf das Präsentieren eines Bildes der Person selbst (Eigengesicht) anders, als wenn das Bild einer anderen Person präsentiert wird. In diesem Zusammenhang offenbart die DE 10 2020 109 284 A1 ein Authentifizierungssystem auf Basis von Hirnaktivitätssignalen, die DE 10 2020 109 285 A1 ein Authentifizierungssystem auf Basis von Fremdbildern und Bekanntbildern und entsprechenden Hirnaktivitätssignalen sowie die DE 10 2020 109 286 A1 ein Authentifizierungssystem auf Basis eines Telekommunikationsgeräts mit einem Hirnaktivitätssensor.

Diese Druckschriften offenbaren des Weiteren, dass zudem anhand der Pupille eines Probanden erfasst werden kann, ob sich der Proband in einem dargestellten Gesichtsbild selbst erkennt oder jemand anderen erkennt. Die Pupille bleibt bei Eigengesichtserkennung weiter als bei Fremdgesichtserkennung.

Das Paper von Lisa Schwetlick et al. mit dem Titel "Self-recognition generates characteristic responses in pupil dynamics and microsaccade rate" befasst sich wissenschaftlich mit der Selbsterkennung.

Es ist die Aufgabe der Erfindung, ein Videokonferenzverfahren zu verbessern und hierzu geeignete Vorrichtungen bereitzustellen.

Die Aufgabe wird durch ein Videokonferenzverfahren mit den Merkmalen gemäß Patentanspruch 1 sowie durch eine Vorrichtung zum Ermöglichen einer Teilnahme an einer Videokonferenz mit den Merkmalen nach Patentanspruch 15, eine Vorrichtung zum Sichern einer Videokonferenz mit den Merkmalen nach Patentanspruch 16 sowie ein System zum Organisieren einer Videokonferenz nach Patentanspruch 18 gelöst.

Vorteilhafte Ausbildungen finden sich in den Unteransprüchen.

Bei der Erfindung ist somit ausgehend von dem oben beschriebenen gattungsgemäßen Verfahren vorgesehen, dass eine physiologische Reaktion der Person auf das Betrachten der Wiedergabe der Bilddaten sensorisch erfasst und ausgewertet wird.

In diesem Zusammenhang kann erfasst werden, auf welche Wiedergabe von Bilddaten die Person momentan blickt, und wie sich die physiologische Reaktion darauf verhält. So ist auf der Bildausgabevorrichtung möglicherweise eine ganze Gruppe von Teilnehmern mit ihrem Bild gezeigt, und die physiologische Reaktion kann abhängig vom Blickwinkel erfasst werden: Blickt die Person auf ihr eigenes Bild, reagiert sie physiologisch anders, als wenn sie auf das Bild einer anderen teilnehmenden Person blickt.

Gemäß vorteilhaften Ausführungsformen erfolgt die sensorische Erfassung mittels der gleichen Kamera, die die Bilddaten aufnimmt.

Gemäß vorteilhaften Ausführungsformen wird die Pupille beobachtet. Insbesondere kann dies so aussehen, dass zusätzlich ein Pupillendurchmesser und/oder eine Pupillendurchmesseränderung erfasst und bei dem Auswerten genutzt wird beziehungsweise werden. Solche Daten zum Pupillendurchmesser und/oder der Pupillendurchmesseränderung werden vorzugsweise in einem Zeitraum ab 100 ms und bis 3000 ms nach dem Beginn des Betrachtens der Wiedergabe eines bestimmten Gesichts gewonnen, weiter vorzugsweise in einem Zeitraum ab 200 ms und bis 2000 ms nach dem Beginn des Betrachtens der Wiedergabe eines bestimmten Gesichts gewonnen. Unter "Beginn des Betrachtens" wird verstanden, dass die folgende Situation zunächst erfasst und dann ausgewertet wird: Die teilnehmende Person wechselt ihre Blickrichtung während der Teilnahme an der Videokonferenz und betrachtet irgendwann wiedergegebene Bilddaten, entweder zu ihrem eigenen Bild oder zu einem fremden Bild. Wird hierbei die Blickrichtung erfasst, kann bei dem Auswerten der Beginn des Erkennens entweder des eigenen Gesichtsbilds oder eines fremden Gesichtsbilds erkannt werden und eine zeitlich auf diesen Beginn auftretende physiologische Reaktion erkannt werden, wenn auch der Zeitraum vor diesem Beginn des Betrachtens berücksichtigt wird.

Insbesondere kann durch das Erfassen schon vor dem Beginn des Blicks auf die Wiedergabe der Bilddaten ein Grundzustand, wie er sich etwa bei der Pupille durch die Lichtverhältnisse einstellt, ermittelt werden. Betrachtet die Person ihr eigenes Bild, ist die Pupille größer/bleibt größer, als wenn sie ein fremdes Bild betrachtet. Dies wird in dem genannten Zeitraum nach dem Beginn des Betrachtens der speziellen Wiedergabe von Bilddaten manifest.

Gemäß vorteilhaften Ausführungsformen kann ein zeitlicher Verlauf der mittleren Frequenz der Mikrosakkaden erfasst werden, wobei die mittlere Frequenz der Mikrosakkaden anhand mehrfachen Betrachtens der Wiedergabe der Bilddaten mit Unterbrechungen (Blick schweift wieder ab) ermittelt wird. In diesem Fall wird der Tatsache besonders gut Rechnung getragen, dass die Mikrosakkaden eine Frequenz in der Größenordnung von 1 Hz aufweisen, und dass die charakteristischen Merkmale in den Mikrosakkaden aber nach ca. 300-600 ms nach Beginn des Betrachtens der Wiedergabe der Bilddaten zu einem bestimmten Gesicht zu finden sind. Hier kann eine Mittelung einen erheblichen Vorteil mit sich bringen.

Gemäß vorteilhaften Ausführungsformen hierzu kann beziehungsweise können ein im mittleren zeitlichen Verlauf auftretendes erstes lokales Minimum der mittleren Frequenz und/oder ein im mittleren zeitlichen Verlauf auftretendes erstes lokales Maximum der mittleren Frequenz und/oder ein im mittleren zeitlichen Verlauf auftretendes zweites lokales Minimum der mittleren Frequenz erfasst werden und bei dem Auswerten genutzt werden.

Insbesondere können sich dieses erste lokale Minimum, das erste lokale Maximum und das zweite lokale Minimum im zeitlichen Verlauf hintereinander befinden, wobei sowohl Abstände auf der Zeitachse als auch auf der Frequenzachse charakteristische Eigenschaften zeigen können, je nachdem, welche Art von Bilddaten die Person betrachtet, nämlich entweder Bilddaten zu ihrem eigenen Gesicht oder zu einem anderen Gesicht, und auch, ob das andere gegebenenfalls das einer bekannten oder einer fremden Person ist.

Gemäß weiteren bevorzugten Ausführungsformen kann vorgesehen sein, dass die Mikrosakkadenrichtung und/oder ein Mikrosakkadenrichtungswechsel erfasst und bei dem Auswerten genutzt wird beziehungsweise werden.

Gemäß weiteren bevorzugten Ausführungsformen kann vorgesehen sein, dass die mittlere Mikrosakkadenbeschleunigung bei mehrfachem jeweils erneutem Betrachten der Wiedergabe eines bestimmten Gesichts mit Unterbrechungen (also nach Makrobewegungen, insbesondere dem Abschweifen des Blicks) erfasst und bei dem Auswerten genutzt wird. Auch diese Mikrosakkadenbeschleunigung hat unterschiedliche Werte, je nachdem, ob die Person ein Bild von sich selbst betrachtet ("Eigengesichtserkennung") oder das einer fremden Person.

Gemäß weiteren bevorzugten Ausführungsformen kann vorgesehen sein, dass die mittlere Mikrosakkadendauer anhand mehrfachen Betrachtens der Wiedergabe der Bilddaten mit Unterbrechungen erfasst und bei dem Auswerten genutzt wird. Dadurch, dass die Mikrosakkaden nach Beginn des Betrachtens eines bestimmten Bildes in einem sehr kurzen Zeitraum prägnant auftreten, der im Vergleich zu der typischen Frequenz von 1 Hz für die Mikrosakkaden gering ist, kann bei Erfassung der Mikrosakkadendauer durchaus etwas beobachtet werden, das bei Erfassung der Mikrosakkadenfrequenz nicht beobachtet wird. Insofern kann die Erfassung der mittleren Mikrosakkadendauer ergänzend zu der Erfassung anderer Größen zu Mikrosakkaden hinzutreten.

Gemäß weiteren bevorzugten Ausführungsformen kann vorgesehen sein, dass der mittlere Zeitpunkt des Einsetzens der Mikrosakkadenbewegung anhand mehrfachen Betrachtens der Wiedergabe der Bilddaten mit Unterbrechungen erfasst und bei dem Auswerten genutzt wird. Auch hier besteht eine Grundtendenz darin, dass die Person bei einem vertrauten Gesicht, insbesondere bei ihrem eigenen, weniger Ausweichbewegungen zeigt. Nach Bildwechsel liegt der genannte Zeitpunkt des Einsetzens der Mikrosakkadenbewegung später, als wenn die Person ein fremdes Bild betrachtet.

Gemäß weiteren bevorzugten Ausführungsformen kann vorgesehen sein, dass die physiologische Reaktion eine Amplitude und/oder eine Amplitudenänderung und/oder eine Mikrosakkadenkrümmung der Mikrosakkaden an zumindest einem Auge der Person betrifft. Auch diese Größen können einzeln und gegebenenfalls in der Zusammenschau charakteristisch für das Betrachten eines Eigenbildes im Verhältnis zu einem Fremdbild sein.

Gemäß vorteilhaften Ausführungsformen der Erfindung weist die Videokonferenz zumindest zwei Teilnehmer auf, und Bilddaten zu einer anderen Person werden von dem Videokonferenzsystem empfangen und auf der Bildausgabevorrichtung wiedergegeben. Nun wird auch die physiologische Reaktion der teilnehmenden Person auf das Betrachten des Bildes der anderen Person sensorisch erfasst (vorzugsweise ebenfalls mithilfe der ohnehin vorhandenen Kamera, vorzugsweise als Eyetracker ausgebildet), und bei der Auswertung wird auf einen Unterschied zwischen den physiologischen Reaktionen einerseits beim Betrachten der Wiedergabe der von dem Videokonferenzsystem empfangenen Bilddaten zu der teilnehmenden Person selbst und andererseits beim Betrachten der Wiedergabe der von dem Videokonferenzsystem empfangenen Bilddaten zu der anderen Person geprüft.

Hier wird eine Art von Eichung vorgenommen, denn die physiologische Reaktion kann möglicherweise nicht absolut ein Indikator für das Betrachten eines Eigenbildes oder Fremdbildes sein, sondern lediglich im Vergleich zwischen Eigenbild und Fremdbild charakteristische Merkmale zeigen.

Gemäß vorteilhaften Ausführungsformen der Erfindung kann vorgesehen sein, dass die Person von der Videokonferenz ausgeschlossen wird und/ oder dass eine Warnung betreffend die Person abgegeben wird, wenn das Auswerten ergibt, dass die teilnehmende Person mit einer Mindestwahrscheinlichkeit nicht ihr eigenes Bild betrachtet, wenn sie auf die Wiedergabe der zu der teilnehmenden Person von dem Videokonferenzsystem empfangenen Bilddaten blickt, also die Wiedergabe der von ihr an das Videokonferenzsystem übermittelten Bilddaten betrachtet.

So kann etwa eine Person, die eine Maske trägt, sich durch die Mikrosakkaden und/oder ihren Pupillendurchmesser verraten, wenn sie das Bild betrachtet, auf dem sie die Maske trägt, weil sie dieses als fremd empfindet. Auch bei einem "Deep Fake", bei dem die Bilddaten, die zum dem Videokonferenzsystem übermittelt werden, manipuliert werden, wird durch den Rückempfang dieser Bilddaten die teilnehmende Person dazu gezwungen, dieses Bild zu betrachten und verrät sich dann dadurch, dass es sich nicht um ihr eigenes Bild handelt.

Gemäß vorteilhaften Ausführungsformen erfolgt das sensorische Erfassen unter Nutzung eines Eyetrackers, wobei ein solcher Eyetracker insbesondere zur Auflösung der Mikrosakkaden Infrarotaufnahmen erzeugen soll, dies vorzugsweise mit einer Frequenz von zwischen 50 und 1000 Hz (etwa: zwischen 100 und 700 Hz, vorteilhafterweise zwischen 120 und 300 Hz, besonders vorteilhaft mit 150 Hz). Bei Aufnahme der Pupille kann die Frequenz auf zwischen 30 und 100 Hz, etwa 50 Hz, heruntergerechnet werden. Für die Erfassung der Mikrosakkaden ist eine hohe Aufnahmefrequenz notwendig oder zumindest hilfreich. Vorzugsweise ist die genannte Kamera Bestandteil des Eyetrackers.

Solche Eyetracker werden zunehmend bei Personal Computern an Tablet-Rechnern und Smartphones verbaut sein, so dass solche Geräte, die typischerweise für eine Teilnahme an einer Videokonferenz benutzt werden, also künftig die Ausführung des Verfahrens wegen des Vorhandenseins des Eyetrackers ermöglichen oder in besonders gutem Maße ermöglichen können.

Die erfindungsgemäße Vorrichtung zum Ermöglichen einer Teilnahme an einer Videokonferenz umfasst:

- eine Bildausgabevorrichtung;
- eine Kamera (wie oben gesagt, vorzugsweise als Bestandteil eines Eyetrackers, insbesondere auch beinhaltend eine Infrarotkamera, die Infrarotaufnahmen mit einer Frequenz von zwischen 200 und 1000 Hz, vorzugsweise 500 Hz, erzeugt);
- eine Datenverarbeitungseinrichtung, die die Bildausgabevorrichtung ansteuert und Bilddaten von der Kamera empfängt; und mit
- einer Kommunikationsschnittstelle zum Koppeln der Vorrichtung an einen Videokonferenzserver oder eine diesem zugeordnete Vorrichtung zum Sichern einer Videokonferenz;
- wobei die Datenverarbeitungseinrichtung ausgelegt ist, von dem Videokonferenzserver Bilddaten zu zumindest einem anderen Teilnehmer zu empfangen und zu bewirken, dass eine Wiedergabe dieser Bilddaten sowie jeweils das aktuell aufgenommene Bild auf der Bildausgabevorrichtung angezeigt wird. Das aktuell aufgenommene Bild kann auf dem Umweg über den Videokonferenzserver wieder in der Datenverarbeitungseinrichtung angekommen sein oder unmittelbar von der Kamera bereitgestellt sein.

Die erfindungsgemäße Vorrichtung ist dadurch gekennzeichnet, dass die Datenverarbeitungseinrichtung ausgelegt ist,

a) eine von der Kamera aufgenommene Bildfolge einer Gesichtserkennung zu unterziehen und daraufhin auszuwerten, welches Bild auf der Bildausgabevorrichtung eine so erkannte Person betrachtet (also welches im Rahmen der Wiedergabe von Bilddaten wiedergegebene Bild im Blickwinkel der Person liegt), und

b) diese von der Kamera aufgenommene Bildfolge und die zugehörige Information, welches Bild eine so erkannte Person betrachtet, an den Videokonferenzserver weiterzuleiten oder an die diesem zugeordnete Vorrichtung zum Sichern einer Videokonferenz weiterzuleiten.

Die erfindungsgemäße Vorrichtung zum Ermöglichen einer Teilnahme an einer Videokonferenz ermöglicht die Durchführung des Verfahrens. Der Organisator einer Videokonferenz kann verlangen, dass alle Teilnehmer mit einer solchen Vorrichtung ausgestattet sind, oder dies kann durch die Software vorgegeben sein. Dann kann erhöhte Sicherheit bestehen, dass eine nicht tatsächlich teilnahmeberechtigte Person ausgeschlossen werden kann.

Die Auswertung der Kameradaten, vorzugsweise der Eyetracker-Daten, auf physiologische Reaktionen hin, kann in der Vorrichtung zum Sichern einer Videokonferenz oder durch den Videokonferenzserver selbst (insbesondere in einem dort bereitgestellten Hardware- und/ oder Software-Plugin) erfolgen.

Die erfindungsgemäße Vorrichtung zum Sichern einer Videokonferenz umfasst:

- eine Datenverarbeitungseinrichtung und auch
- eine Kommunikationsschnittstelle zum Koppeln der Vorrichtung zum Sichern mit einer der oben genannten Vorrichtungen zum Ermöglichen der Teilnahme an der Videokonferenz als Videokonferenzclient.

Erfindungsgemäß ist die Datenverarbeitungseinrichtung ausgelegt, von einer gekoppelten Vorrichtung der genannten Art mit deren Kamera aufgenommene Bilddaten sowie eine zugehörige Information zu empfangen, welches Bild auf der Bildausgabevorrichtung der gekoppelten Vorrichtung von einer auf einer Wiedergabe der Bilddaten gezeigten Person betrachtet wird, und die empfangene Bildfolge anhand der Information daraufhin auszuwerten, ob die Person ihr eigenes Bild betrachtet, wenn sie auf die Wiedergabe der zu ihr selbst von dem Videokonferenzserver empfangenen oder sonstwie (unmittelbar über die Kamera) bereitgestellten Bilddaten blickt.

Insbesondere kann die Vorrichtung zum Sichern einer Videokonferenz aus den Bilddaten einen Pupillendurchmesser der Person und/oder eine Änderung des Pupillendurchmessers der Person und/oder den zeitlichen Verlauf von Mikrosakkaden an einem Auge dieser Person ableiten. Auch die weiteren oben genannten Daten zu Mikrosakkaden können einzeln oder in Kombination beliebig erfasst und ausgewertet werden.

Diese Vorrichtung zum Sichern einer Videokonferenz kann als Einheit durch einen Dienstleister gesondert im Internet oder einem sonstigen Netzwerk bereitgestellt werden, muss also nicht unmittelbar beim Videokonferenzserver beheimatet sein und auch nicht bei den einzelnen Clients. Die Vorrichtung zum Sichern einer Videokonferenz kann allerdings genauso gut auch als Teil des Videokonferenzservers ausgestaltet sein, etwa als Hardware- und/oder Software-Plugin (ergänzende Komponente in Hardware und/oder in Software).

Das erfindungsgemäße System zum Organisieren einer Videokonferenz umfasst entsprechend einen Videokonferenzserver und eine Mehrzahl von Vorrichtungen zum Ermöglichen der Teilnahme an der Videokonferenz gemäß der oben genannten Art als Videokonferenzclients, wobei zwischen dem Videokonferenzserver und den Videokonferenzclients die Vorrichtung zum Sichern der beschriebenen Art bereitgestellt und insbesondere geschaltet ist, um dem Videokonferenzserver mitzuteilen, ob teilnehmende Personen gemäß einem vorbestimmten Kriterium als ihr eigenes Bild betrachtend anzusehen sind.

Die Vorrichtung zum Sichern erhält also die Informationen und die Bilddaten von den Videokonferenzclients, wertet diese aus, etwa unter Heranziehung einer gewissen Wahrscheinlichkeit wie oben angegeben, und das Ergebnis des Auswertens wird dem Videokonferenzserver übermittelt, damit dieser gegebenenfalls eine Person von der Videokonferenz ausschließen kann oder zumindest die Mitteilung erhält, dass alle Sicherheitsmaßnahmen gewährleistet sind.

Gemäß vorteilhaften Ausführungsformen kann vorgesehen sein, dass zum Zweck einer Authentifizierung der Person zusätzlich an zumindest einem Auge der Person das Irismuster, eine Irisverzerrung und/oder das Netzhautmuster erfasst wird beziehungsweise werden und/oder zusätzlich eine biometrische Anordnung von Elementen des Gesichts erfasst wird und/oder zusätzlich Mimik erfasst wird. Allen diesen genannten Gegenständen ist gemeinsam, dass sie mit ein und derselben Erfassungsvorrichtung, nämlich typischerweise einer Kamera (an einem Eyetracker und dergleichen) gewonnen werden können, so dass es keiner zusätzlichen Sensorik bedarf, um diese Authentifizierung ergänzend anhand weiterer Gegenstände vorzunehmen.

Nachfolgend werden bevorzugte Ausführungsformen der Erfindung unter Bezug auf die Zeichnung näher beschrieben, in der

Fig. 1     schematisch den Aufbau einer Ausführungsform der erfindungsgemäßen Vorrichtung zum Ermöglichen des Teilnehmens an einer Videokonferenz (als Videokonferenzclient) veranschaulicht,

Fig. 2     den zeitlichen Verlauf des mittleren Pupillendurchmessers bei verschiedenen Klassen von dargestellten Gesichtern veranschaulicht,

Fig. 3     den mittleren zeitlichen Verlauf der mittleren Mikrosakkadenfrequenz (auch als "Mikrosakkadenrate" zu bezeichnen) für verschiedene Situationen veranschaulicht,

Fig. 4     den gemittelten Verlauf der Mikrosakkadenfrequenz ausgehend von dem Beginn der Darstellung eines Eigengesichtsbilds und daraus ableitbare Größen veranschaulicht,

Fig. 5     den Aufbau einer erfindungsgemäßen Vorrichtung nach Fig. 1 im weiteren Detail zusammen mit einer Trainingseinrichtung veranschaulicht, und

Fig. 6     schematisch die Schritte eines Prüfverfahrens bei einer Videokonferenz als Beispiel für ein erfindungsgemäßes Verfahren veranschaulicht.

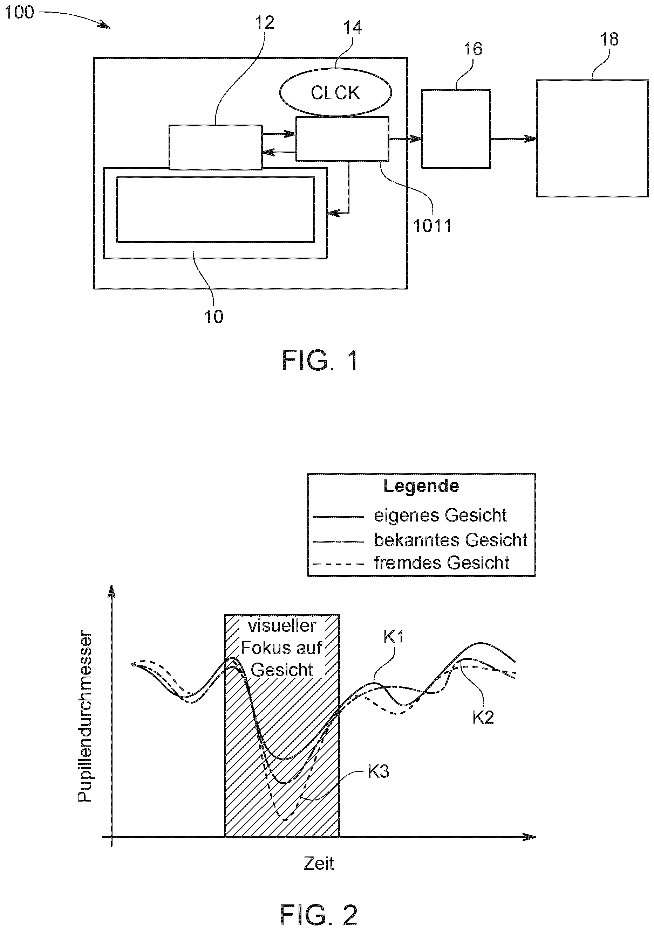

Eine in Fig. 1 gezeigte und dort im Ganzen mit 100 bezeichnete Vorrichtung zum Ermöglichen der Teilnahme an einer Videokonferenz umfasst eine Bildausgabevorrichtung 10, hier als Bildschirm dargestellt, sowie eine Kamera 12, die die Form eines Eyetrackers aufweisen kann, also insbesondere Infrarotaufnahmen (gegebenenfalls zusätzlich zu optischer Erfassung) der vor dem Bildschirm befindlichen Person erfasst, dies vorzugsweise mit einer Frequenz von zwischen 50 Hz und 1000 Hz etwa 150 Hz. Zur Bildausgabevorrichtung gehört eine Datenverarbeitungseinrichtung 1011, die die Bildausgabevorrichtung 10 ansteuert und Bilddaten von der Kamera 12 empfängt sowie gegebenenfalls auch die Kamera 12 ansteuert, dies unter Nutzung des Zeitgebers, "Clock", 14 (deutsch auch: "Uhr"). Über die Datenverarbeitungseinrichtung ist die Vorrichtung 100 mit einer Vorrichtung 16 zum Sichern der Videokonferenz gekoppelt, über die Daten dann an den Videokonferenzserver 18 weitergeleitet werden.

Mithilfe des Eyetrackers 12 lassen sich hochaufgelöste Bilder gewinnen, die auch dazu genutzt werden können, sensorisch eine physiologische Reaktion der teilnehmenden Person zu erfassen bzw. einer Auswertung zu unterziehen.

Nachfolgend wird zunächst erläutert, wie eine solche physiologische Reaktion aussehen kann.

Bereits an sich bekannt ist es, mittels des Eyetrackers 12 den Pupillendurchmesser der Person zu erfassen. Fig. 2 zeigt eine Darstellung des durchschnittlichen Pupillendurchmessers über die Zeit. Die Kurve K1 veranschaulicht eine physiologische Reaktion bezüglich des Pupillendurchmessers beim Betrachten des eigenen Gesichts, die Kurve K2 beim Betrachten eines anderen, aber bekannten Gesichts, und die Kurve K3 beim Betrachten eines fremden Gesichts. Hierbei entspricht dem unterlegten Bereich "visueller Fokus auf Gesicht" die zeitliche Darstellung des entsprechenden Gesichtsbilds. Es ist ersichtlich, dass sich bei Betrachten eines Gesichts der Pupillendurchmesser stets verringert und dass er aber beim eigenen Gesicht größer bleibt als bei einem anderen Gesicht, bei einem bekannten Gesicht größer bleibt als bei einem fremden Gesicht.

Eine vergleichbare Reaktion erhält man nun, wenn die Mikrosakkadenfrequenz, auch als "Mikrosakkadenrate" bezeichnet, über die Zeit ermittelt wird.

Die Mikrosakkadenfrequenz ist nicht ganz leicht zu ermitteln.

Mikrosakkaden sind von einer Person unfreiwillig gezeigte Änderungen im Blickwinkel innerhalb von 1° des Gesichtsfeldes. Ändert sich eine Darstellung, so gibt es im zeitlichen Übergang eine Änderung in der Mikrosakkadenfrequenz, insbesondere eine Verringerung.

Eine Mikrosakkade als solche kann anhand eines Geschwindigkeitsschwellwerts erkannt werden. Die Mikrosakkadenfrequenz kann abgeschätzt werden, indem nur das Einsetzen der Mikrosakkaden erfasst wird, abhängig vom Zeitpunkt der Änderung der Darstellung, also abhängig von dem Beginn des Betrachtens der Wiedergabe des Gesichts/der zugehörigen Bilddaten im vorliegenden Fall. Diese Zeitpunkte des Einsetzens der Mikrosakkadenbewegung werden wiederholt gemessen, so dass man eine Folge mit den Messwerten {t1, t2, t3, ...} erhält. Die Mikrosakkadenrate oder -frequenz r(t) zum Zeitpunkt t wird geschätzt durch Nutzung der Formel:

$$r_{approx}(t) = \int_{-\infty}^{+\infty} \mathrm{d}\tau\, w(\tau)\rho(t-\tau)$$

(1).

Hierin ist die sogenannte Mikrosakkade für Antwortfunktion ρ(t) definiert als:

$$\rho(t) = \sum_{i=1}^{N} \delta(t - t_i)$$

(2),

wobei δ(t) die Diracsche Delta-Funktion ist. Als Filter wird der folgende Kern verwendet:

$$w(\tau) = \left[\alpha^2 \tau \exp(-\alpha\tau)\right]_+$$

(3),

wobei der Parameter α auf 1/30 gesetzt ist.

Die so erhaltene mittlere Mikrosakkadenfrequenz oder -rate r(t) lässt sich über die Zeit darstellen. Hier lässt sich nun unterscheiden, ob die Person ihr eigenes Gesicht oder ein anderes, insbesondere ein bekanntes oder fremdes Gesicht, betrachtet hat. Die Mikrosakkadenfrequenz wird durch die Veränderung im Gesichtsfeld unterdrückt. Die Erholung von der Unterdrückung der Mikrosakkaden wird verringert, wenn die Person ihr eigenes Gesicht betrachtet, siehe Kurve K4. Beim Betrachten eines bekannten anderen Gesichts bleibt die Mikrosakkadenfrequenz etwas verringert, gemäß Kurve K5. Bei Betrachten eines fremden Gesichts hingegen bleibt gemäß Kurve K6 die Mikrosakkadenrate zwar verringert, aber nicht im gleichen Ausmaße.

Die Vorrichtung 16 zum Sichern einer Videokonferenz aus Fig. 1 soll in der Lage sein, diese Mikrosakkadenfrequenz gemäß den obigen Formeln zu ermitteln, bei wiederholtem Betrachten der Wiedergabe der Bilddaten, vor allem auch mehrfach des Eigengesichtsbilds. Dann lässt sich erkennen, ob die Person ihr eigenes Bild betrachtet oder nicht.

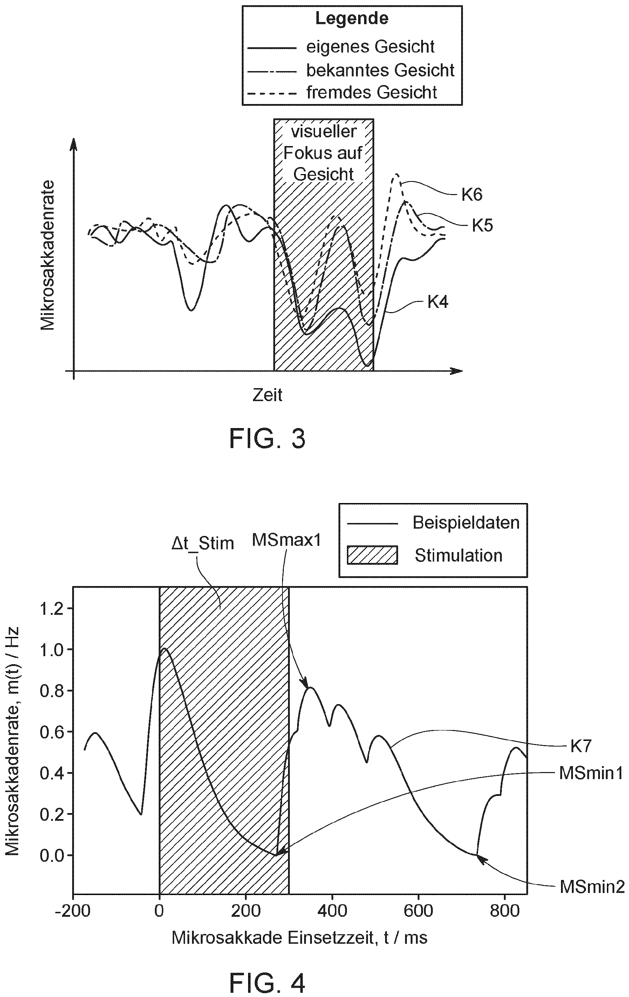

Gemäß Fig. 4 kann die Mikrosakkadenfrequenz aufgetragen werden über den Zeitpunkt des Einsetzens der Mikrosakkadenbewegung (Frequenz in Hz, Einsetzzeitpunkt in ms). Die hier gezeigte Kurve lässt sich wie folgt auswerten: Es lässt sich das erste lokale Minimum erfassen, das während des Betrachtens des Eigenbildes (im Zeitraum Δ(t)_Stim) auftritt. Endet nun dieser Zeitraum $\Delta(t)\_Stim$, tritt ein lokales Maximum MSmax auf. Dann folgt gemäß der Kurve K7 irgendwann ein weiteres lokales Minimum MSmin2. Sowohl die absoluten Werte für diese Minima und Maxima als auch die zeitlichen Abstände gemäß der x-Achse in Fig. 4 und die Frequenzabstände gemäß der y-Achse in Fig. 4 lassen sich charakteristisch zuordnen der Frage, ob die Person ihr eigenes Gesicht betrachtet oder nicht. Die Vorrichtung 16 zum Sichern der Videokonferenz ist entsprechend ausgelegt, diese Kurve K7 zu ermitteln und auszuwerten.

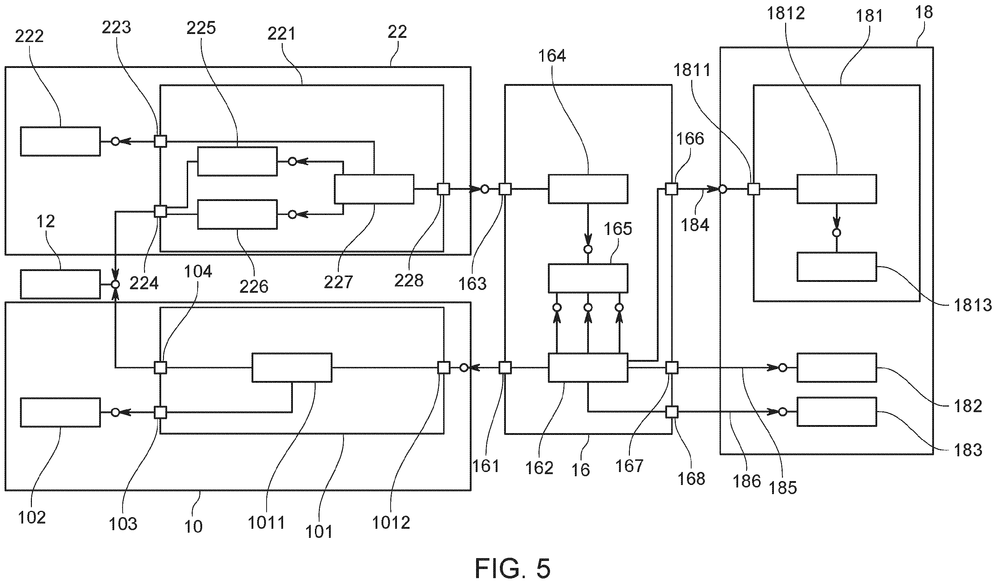

Fig. 5 zeigt das gesamte System zum Organisieren einer Videokonferenz in der Zusammenschau, wobei hier auch eine Trainingseinrichtung 22 dargestellt ist, die lediglich in einer Frühphase genutzt werden muss und später entfallen kann. Insbesondere sind die Komponenten 10, 12, 16 und 18 aus Fig. 1 nochmals im Detail dargestellt. Die Komponente 10 (Bildausgabevorrichtung) umfasst neben einem Software- und/oder Hardware-Plugin mit der zugehörigen Steuereinrichtung (Datenverarbeitungseinrichtung 1011) den eigentlichen Videokonferenzclient 102, eine Schnittstelle 103 für diesen sowie eine Schnittstelle 104 für den Eyetracker 12, beide Schnittstellen 103 und 104 zu der Datenverarbeitungseinrichtung 1011 hin. Die Kommunikationsschnittstelle der Datenverarbeitungseinrichtung 1011 ist mit 1012 bezeichnet und mit einer entsprechenden Kommunikationsschnittstelle 161 an der Vorrichtung 16 zum Sichern der Videokonferenz gekoppelt.

In der Vorrichtung 16 zum Sichern einer Videokonferenz ist als Herzstück eine Verifikationseinheit 162, also insbesondere eine Datenverarbeitungseinrichtung, vorgesehen, die die eingehenden Daten überprüft und ein Ergebnis der Überprüfung ausgibt. Über eine weitere Schnittstelle 163 der Vorrichtung 16 zum Sichern der Videokonferenz werden Daten zum Training an einen Modellgeber 164 übermittelt, der als Einrichtung zum Bereitstellen einer künstlichen Intelligenz oder generell als Maschinenlernsystem ausgebildet sein kann und darauf trainiert ist, aus charakteristischen physiologischen Reaktionen herauszulesen, ob eine an einer Videokonferenz teilnehmende Person (die sich vor dem Eyetracker 12 befindet) ihr eigenes Bild betrachtet oder ein fremdes Bild. Ein Speicher 165 speichert das geschaffene/ gegebene Modell.

Die Trainingseinrichtung 22 ist ihrerseits über eine Schnittstelle 224 mit dem Eyetracker 12 gekoppelt. Sie umfasst ferner ein Display 222, das über die Schnittstelle 223 mit dem Herzstück, dem Trainingsclient 221 gekoppelt ist. Im Trainingsclient gibt es einen Eyetracker-Datenauswerter 225 und einen Eyetracker-Steuerer 226, wobei die Daten sich in der Trainingskonfiguration 227 widerspiegeln. Die Trainingseinrichtung 22 erfasst von einer Person, die als Proband fungiert, welches Bild auf einer Videokonferenz sie betrachtet, ihr eigenes Bild oder das einer anderen Person. Sie erfasst solche Daten über die Schnittstelle 224 unter Nutzung der Einheiten 225, 226 und 227, wobei die Daten über die Schnittstelle 228 zu der Vorrichtung 16 zum Sichern der Videokonferenz hin an deren Schnittstelle 163 und damit an den Modellgeber 164 übermittelt werden.

Der Modellgeber 164 erhält auf diese Weise Daten einerseits betreffend Blickrichtung eines Probanden bzw. aus der Blickrichtung abgeleitet, welches Bild er momentan betrachtet, sein eigenes oder ein anderes, und hierzu Bilddaten, aus denen der Modellgeber eine physiologische Reaktion wie beispielsweise eine Mikrosakkadenfrequenz bzw. -rate ableiten kann.

Entsprechendes erfolgt nun bei laufender Videokonferenz in der Einheit 10: Es werden mithilfe des Eyetrackers 12 Bilddaten aufgenommen und über die Datenverarbeitungseinrichtung 1011 und die Schnittstellen 1012 und 161 an die Verifikationseinheit 162 übermittelt. Mit den Daten wird übermittelt, welches Bild auf dem Bildschirm die Person gerade betrachtet. Anhand des in 165 gespeicherten Modells kann die Verifikationseinheit 162 ein Auswerteergebnis über die Schnittstellen 166, 167 und 168 an den Videokonferenzserver 18 abgeben, der ein Videokonferenzserver-Plugin 181 in Form von Hardware und/oder Software aufweist, der zusätzlich einen Überwachungsserver 182 und den eigentlichen Videokonferenzservergrundbaustein 183 umfasst.

Im Plugin 181, das über die Schnittstelle 1811 mit der Schnittstelle 184 gekoppelt ist, gibt es eine Identitätsvalidierungseinheit 1812, die ein Ergebnis an den Videoanalysator (Videoauswerter) 1813 übermittelt. Von der Verifikationseinheit 162 wird über die Schnittstellen 187 und 185 eine Auswerteergebnis auch an den Überwachungsserver 182 übermittelt, über die Schnittstellen 168 und 186 an den eigentlichen Videokonferenzservergrundbaustein 183.

Im Ergebnis kann bei laufender Videokonferenz mit den Einheiten 10, 16 und 18 nach Training unter Nutzung der Trainingseinrichtung 22 entschieden werden, ob eine teilnehmende Person tatsächlich teilnahmeberechtigt ist, also ob es sich um die Person handelt, die in der Videokonferenz erwartet ist.

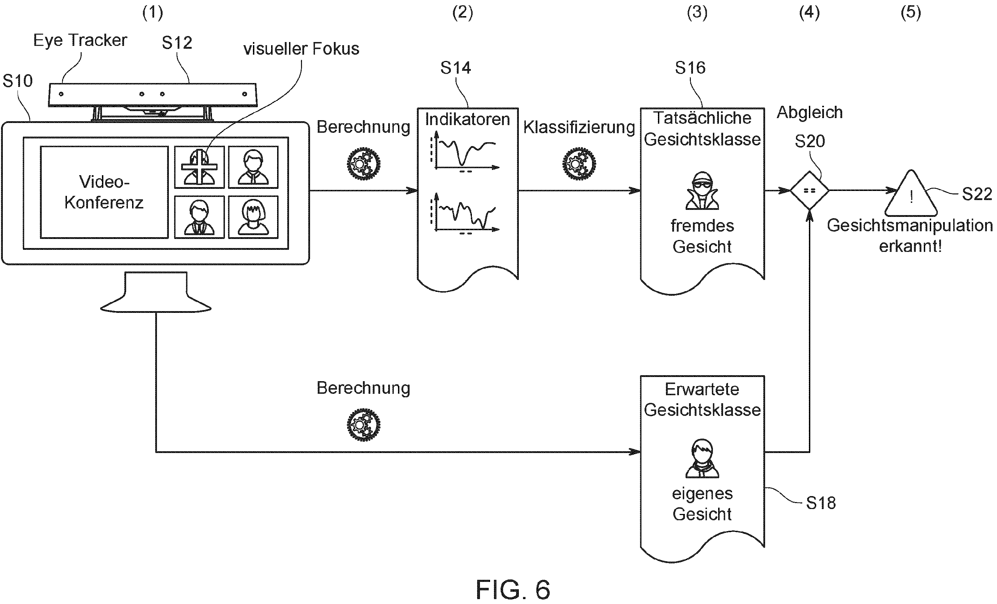

Dies wird nachfolgend abschließend anhand von Fig. 6 erläutert:

Im Schritt S10 läuft die Videokonferenz bereits, und es wird mittels des Eyetrackers in Schritt S12 ein Videobild der vor dem Bildschirm (Bildausgabevorrichtung 10 aus Fig. 1) befindlichen Person erfasst. Es wird immer wieder neu erfasst, wenn die Person auf ein bestimmtes Videobild blickt, nämlich einerseits auf ein Videobild von einer anderen Person und andererseits ein Videobild, das ihr selbst zugeordnet ist und eigentlich sie selbst zeigen soll. Nach mehrfachem Hin- und Herschweifen des Blicks sind mehrfach Mikrosakkaden erfasst worden, und diese Indikatoren können in Schritt S14 zusammengefasst werden (dies erfolgt vorzugsweise in der Einheit 162 des Systems zum Sichern). In Schritt S16 wird daraus abgeleitet, welcher Gesichtsklasse ein bestimmtes betrachtetes Gesicht (also eine Wiedergabe von bestimmten Bilddaten) zuzuordnen ist. Die Klassen können eingeteilt sein binär in "eigenes Gesicht" und "anderes Gesicht" oder auch ternär in "eigenes Gesicht", "bekanntes anderes Gesicht" und "unbekanntes anderes Gesicht". In Schritt S18 wird nun geprüft, dies anhand der Blickrichtung, welcher Soll-Klasse das Gesicht angehören soll. In Schritt S20 erfolgt ein Abgleich gemäß der Frage, ob die in Schritt S16 ermittelte Klasse mit der in Schritt S18 abgeleiteten Klasse übereinstimmt. Ist dies nicht der Fall, wird in Schritt S22 die Maßnahme getroffen, dass die Person von der Videokonferenz ausgeschlossen wird. Es kann nämlich geschehen sein, dass die Person ein manipuliertes Bild zu sich selbst eingespielt hat (durch Tragen einer Gummimaske, Vorhalten einer Fotografie, Manipulation des Einspielens der Bilddaten durch den Eyetracker 12 und dergleichen), das sie nicht so zeigt, wie sie eigentlich aussieht. Aufgrund der physiologischen Reaktion wie oben beschrieben (Pupillendurchmesser, Pupillendurchmesseränderung, Mikrosakkadendaten) wird abgeleitet, ob die Person ihr eigenes Bild betrachtet oder nicht, und nach Warnung bei negativem Abgleich in Schritt S20 erfolgt das Verweigern der weiteren Teilnahme für diese Person.

Hier muss beim Schritt des Abgleichens in Schritt S20 mit einer Mindestwahrscheinlichkeit gearbeitet werden. Je nach Sicherheitsstufe kann dies so eingestellt werden, dass im Zweifel eher einer Person zu viel die Teilnahme verweigert wird als einer Person zu wenig.

Es wurde gezeigt, dass eine Manipulation von Gesichtsbilddaten in Online-Video-Szenarien erkannt werden kann, um Deep Fakes zu vermeiden.

Bezugszeichenliste

| | |
|---|---|
| 10 | Bildausgabevorrichtung |
| 12 | Kamera (Eyetracker) |
| 14 | Zeitgeber |
| 16 | Vorrichtung zum Sichern der Videokonferenz |
| 18 | Videokonferenzserver |
| 22 | Trainingseinrichtung |
| 100 | Vorrichtung zum Ermöglichen der Teilnahme an einer Videokonferenz |
| 102 | Videokonferenzclient |
| 103 | Schnittstelle |
| 104 | Schnittstelle |
| 161 | Kommunikationsschnittstelle |
| 162 | Verifikationseinheit |
| 163 | Schnittstelle |
| 164 | Modellgeber |
| 165 | Speicher |
| 166 | Schnittstelle |
| 167 | Schnittstelle |
| 168 | Schnittstelle |
| 181 | Videokonferenzserver-Plugin |
| 182 | Überwachungsserver |
| 183 | Videokonferenzservergrundbaustein |
| 184 | Schnittstelle |
| 185 | Schnittstelle |
| 186 | Schnittstelle |
| 187 | Schnittstelle |
| 221 | Trainingsclient |
| 222 | Display |
| 223 | Schnittstelle |
| 224 | Schnittstelle |
| 225 | Eyetracker-Datenauswerter |
| 226 | Eyetracker-Steuerer |
| 227 | Trainingskonfiguration |
| 228 | Schnittstelle |
| 1011 | Datenverarbeitungseinrichtung |
| 1012 | Kommunikationsschnittstelle |
| 1811 | Schnittstelle |
| 1812 | Identitätsvalidierungseinheit |
| 1813 | Videoanalysator |
| K1, K2, K3, K4, K5, K6, K7 | Kurven |

S10, S12, S14, S16, S18, S20, S22    Schritte einer Ausführungsform des erfindungsgemäßen Verfahrens

**Patentansprüche**

1. Videokonferenzverfahren, wobei zur Prüfung der Identität und/oder Authentizität einer an einer Videokonferenz teilnehmenden Person die folgenden Schritte ausgeführt werden: Aufbau einer Verbindung zwischen einem Videokonferenzsystem (18) und einer Kamera (12) sowie einer Bildausgabevorrichtung (10) der Person, Erfassung von Bilddaten durch die Kamera (12), Übertragen der Bilddaten an das Videokonferenzsystem (18), Senden der Bilddaten von dem Videokonferenzsystem (18) an die Bildausgabevorrichtung (10), Wiedergabe der empfangenen Bilddaten auf der Bildausgabevorrichtung (10), Prüfung der Identität der Person mit einer in den wiedergegebenen Bilddaten gezeigten Person, **dadurch gekennzeichnet, dass** eine physiologische Reaktion der Person auf das Betrachten der Wiedergabe der Bilddaten sensorisch erfasst und ausgewertet wird.

2. Verfahren nach Anspruch 1, **dadurch gekennzeichnet, dass** die physiologische Reaktion eine Änderung des Pupillendurchmessers zumindest eines Auges der Person betrifft.

3. Verfahren nach Anspruch 1 oder 2, **dadurch gekennzeichnet, dass** die physiologische Reaktion einen zeitlichen Verlauf der Mikrosakkaden an zumindest einem Auge der Person betrifft.

4. Verfahren nach Anspruch 3, bei dem ein zeitlicher Verlauf der mittleren Frequenz der Mikrosakkaden erfasst wird, wobei die mittlere Frequenz der Mikrosakkaden anhand mehrfachen Erfassens des jeweils immer wieder neuen Beginns des Betrachtens der Wiedergabe von den gleichen empfangenen Bilddaten ermittelt wird.

5. Verfahren nach Anspruch 4, bei dem ein im mittleren zeitlichen Verlauf auftretendes erstes lokales Minimum der mittleren Frequenz und/oder ein im mittleren zeitlichen Verlauf auftretendes erstes lokales Maximum der mittleren Frequenz und/oder ein im mittleren zeitlichen Verlauf auftretendes zweites lokales Minimum der mittleren Frequenz erfasst wird und bei dem Auswerten genutzt wird beziehungsweise werden.

6. Verfahren nach einem der vorhergehenden Ansprüche, bei dem eine Mikrosakkadenrichtung und/oder ein Mikrosakkadenrichtungswechsel erfasst und bei dem Auswerten genutzt wird beziehungsweise werden.

7. Verfahren nach einem der vorhergehenden Ansprüche, bei dem eine mittlere Mikrosakkadenbeschleunigung anhand mehrfachen Erfassens des jeweils immer wieder neuen Betrachtens der Wiedergabe von den gleichen empfangenen Bilddaten ermittelt wird, und/oder bei dem eine mittlere Mikrosakkadendauer anhand mehrfachen Erfassens des jeweils immer wieder neuen Beginns des Betrachtens der Wiedergabe von den gleichen empfangenen Bilddaten ermittelt wird, und/oder bei dem ein mittlerer Zeitpunkt des Einsetzens der Mikrosakkadenbewegung anhand mehrfachen Erfassens des jeweils immer wieder neuen Beginns des Betrachtens der Wiedergabe von den gleichen empfangenen Bilddaten ermittelt wird.

8. Verfahren nach einem der vorhergehenden Ansprüche, bei dem zusätzlich ein Pupillendurchmesser und/oder eine Pupillendurchmesseränderung erfasst und bei dem Auswerten genutzt wird beziehungsweise werden, wobei vorzugsweise Daten zum Pupillendurchmesser und/oder der Pupillendurchmesseränderung in einem Zeitraum ab 100 ms nach bis 3000 ms nach dem Beginn des Betrachtens der Wiedergabe der Bilddaten gewonnen werden, weiter vorzugsweise in einem Zeitraum ab 200 ms nach und bis 2000 ms nach dem Beginn der des Betrachtens der Wiedergabe von den gleichen empfangenen Bilddaten gewonnen werden.

9. Verfahren nach einem der vorhergehenden Ansprüche, **dadurch gekennzeichnet, dass** die physiologische Reaktion eine Richtung und/oder einen Richtungswechsel und/oder eine Amplitude und/oder eine Amplitudenänderung und/oder eine Mikrosakkadenkrümmung der an einem Auge der Person auftretenden Mikrosakkaden betrifft.

10. Verfahren nach einem der vorhergehenden Ansprüche, **dadurch gekennzeichnet, dass** die Videokonferenz zumindest zwei Teilnehmer aufweist und Bilddaten zu einer anderen Person von dem Videokonferenzsystem (18) empfangen und auf der Bildausgabevorrichtung (10) wiedergegeben werden, und wobei auch die physiologische Reaktion der teilnehmenden Person auf das Betrachten des Bildes der anderen Person sensorisch erfasst wird, und wobei bei der Auswertung auf einen Unterschied zwischen den physiologischen Reaktionen einerseits beim Betrachten der Wiedergabe der von dem Videokonferenzsystem empfangenen Bilddaten zu der teilnehmenden Person selbst und andererseits beim Betrachten der Wiedergabe der von dem Videokonferenzsystem empfangenen Bilddaten zu der anderen Person geprüft wird, und/oder bei dem die Person von der Videokonferenz ausgeschlossen und/oder eine Warnung betreffend diese abgegeben wird, wenn das Auswerten ergibt, dass die teilnehmende Person mit einer Mindestwahrscheinlichkeit nicht ihr eigenes Bild betrachtet, wenn sie auf die Wiedergabe der zu der teilnehmenden Person von dem Videokonferenzsystem empfangenen Bilddaten blickt.

11. Verfahren nach einem der vorhergehenden Ansprüche, bei dem das sensorische Erfassen unter Nutzung eines Eyetrackers erfolgt, der Infrarotaufnahmen mit einer Frequenz von zwischen 200 und 1000 Hz erzeugt, wobei die Kamera vorzugsweise Bestandteil des Eyetrackers ist.

12. Vorrichtung (100) zum Ermöglichen einer Teilnahme an einer Videokonferenz, mit:

- einer Bildausgabevorrichtung (10);
- einer Kamera (12);
- einer Datenverarbeitungseinrichtung (1011), die die Bildausgabevorrichtung (10) ansteuert und Bilddaten von der Kamera (12) empfängt; und mit
- einer Kommunikationsschnittstelle (1012) zum Koppeln der Vorrichtung an einen Videokonferenzserver oder eine diesem zugeordnete Vorrichtung (16) zum Sichern einer Videokonferenz;
- wobei die Datenverarbeitungseinrichtung (1011) ausgelegt ist, von dem Videokonferenzserver (18) Bilddaten zu zumindest einem anderen Teilnehmer zu empfangen und zu bewirken, dass eine Wiedergabe dieser Bilddaten sowie jeweils das aktuell aufgenommene Bild auf der Bildausgabevorrichtung (10) angezeigt wird,

**dadurch gekennzeichnet, dass** die Datenverarbeitungseinrichtung (1011) ausgelegt ist,

a) eine von der Kamera (12) aufgenommene Bildfolge einer Gesichtserkennung zu unterziehen und daraufhin auszuwerten, welches Bild auf der Bildausgabevorrichtung eine so erkannte Person betrachtet, und
b) diese von der Kamera (12) aufgenommene Bildfolge und die zugehörige Information, welches Bild eine so erkannte Person betrachtet, an den Videokonferenzserver weiterzuleiten oder an die diesem zugeordnete Vorrichtung (16) zum Sichern einer Videokonferenz weiterzuleiten.

13. Vorrichtung (16) zum Sichern einer Videokonferenz, mit:

- einer Datenverarbeitungseinrichtung (162) und mit
- einer Kommunikationsschnittstelle (161) zum Koppeln der Vorrichtung (16) zum Sichern mit einer Vorrichtung (100) nach Anspruch 12 als Videokonferenzclient,

**dadurch gekennzeichnet, dass** die Datenverarbeitungseinrichtung (162) ausgelegt ist, von einer gekoppelten Vorrichtung (100) nach Anspruch 12 mit deren Kamera (12) aufgenommene Bilddaten sowie eine zugehörige Information zu empfangen, welches Bild auf der Bildausgabevorrichtung (10) der gekoppelten Vorrichtung (100) von einer auf einer Wiedergabe der Bilddaten gezeigten Person betrachtet wird, und die empfangene Bildfolge anhand der Information daraufhin auszuwerten, ob die Person ihr eigenes Bild betrachtet, wenn sie auf die Wiedergabe der zu ihr selbst bereitgestellten Bilddaten blickt.

14. Vorrichtung nach Anspruch 13, **dadurch gekennzeichnet, dass** aus den Bilddaten ein Pupillendurchmesser der Person und/oder eine Änderung des Pupillendurchmessers der Person und/oder der zeitliche Verlauf von Mikrosakkaden an einem Auge der Person abgeleitet wird.

15. System zum Organisieren einer Videokonferenz, mit einem Videokonferenzserver (18) und einer Mehrzahl von Vorrichtungen (100) nach Anspruch 12 als Videokonferenzclients, wobei zwischen dem Videokonferenzserver (18) und den Videokonferenzclients die Vorrichtung (16) zum Sichern nach Anspruch 13 oder 14 geschaltet ist, um dem Videokonferenzserver (18) mitzuteilen, ob teilnehmende Personen gemäß einem vorbestimmten Kriterium als ihr eigenes Bild betrachtend anzusehen sind.

FIG. 1

FIG. 2

**FIG. 3**

**FIG. 4**

FIG. 5

FIG. 6

EP 4 528 683 A1

**Europäisches Patentamt**
**European Patent Office**
**Office européen des brevets**

## EUROPÄISCHER RECHERCHENBERICHT

**Nummer der Anmeldung**

EP 24 20 2324

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 11 546 390 B1 (BOODAEI MICHAEL [IL] ET AL) 3. Januar 2023 (2023-01-03) <br> * Zusammenfassung * <br> * Spalte 5 - Spalte 15 * <br> ----- | 1-15 | INV. <br> G06V40/18 <br> G06V40/40 <br> H04N7/15 |
| X | LISA SCHWETLICK ET AL: "Self-recognition generates characteristic responses in pupil dynamics and microsaccade rate", ARXIV.ORG, CORNELL UNIVERSITY LIBRARY, 201 OLIN LIBRARY CORNELL UNIVERSITY ITHACA, NY 14853, <br> 28. Juli 2023 (2023-07-28), XP091576130, <br> * Zusammenfassung * <br> * Seite 1 - Seite 17 * <br> ----- | 1-15 | |
| A | XUE CHENG ET AL: "Sustained spatial attention accounts for the direction bias of human microsaccades", SCIENTIFIC REPORTS, <br> Bd. 10, Nr. 1, <br> 26. November 2020 (2020-11-26), XP093246668, <br> US <br> ISSN: 2045-2322, DOI: 10.1038/s41598-020-77455-7 <br> * Zusammenfassung * <br> * Seite 1 * <br> ----- | 1-15 | RECHERCHIERTE SACHGEBIETE (IPC) <br><br> G06V <br> H04N |

Der vorliegende Recherchenbericht wurde für alle Patentansprüche erstellt

| Recherchenort | Abschlußdatum der Recherche | Prüfer |
|---|---|---|
| Den Haag | 4. Februar 2025 | Karwe, Markus |

## ANHANG ZUM EUROPÄISCHEN RECHERCHENBERICHT
## ÜBER DIE EUROPÄISCHE PATENTANMELDUNG NR.

EP 24 20 2324

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2025

| Im Recherchenbericht angeführtes Patentdokument | Datum der Veröffentlichung | Mitglied(er) der Patentfamilie | Datum der Veröffentlichung |
|---|---|---|---|
| US 11546390 B1 | 03-01-2023 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020109284 A1
- DE 102020109285 A1
- DE 102020109286 A1